# EUROPEAN PATENT SPECIFICATION

(11) **EP 0 856 018 B1**
(45) Date of publication and mention of the grant of the patent: **31.10.2001**
(21) Application number: 96934465.4
(22) Date of filing: 24.09.1996
(51) Int. Cl.: C08G 18/48, C08G 18/80, C08J 9/14

(54) **RIGID POLYURETHANE FOAMS**
POLYURETHANHARTSCHÄUME
MOUSSES RIGIDES DE POLYURETHANNE

(30) Priority: 19.10.1995 EP 95116482
(43) Date of publication of application: 05.08.1998
(73) Proprietor: HUNTSMAN INTERNATIONAL LLC, Salt Lake City, Utah 84108 (US)
(72) Inventor: DE VOS, Rik, I-21100 Varese (IT)
(74) Representative: Swinnen, Anne-Marie
(86) International application number: EP9604163
(87) International publication number: WO9714730

(56) References cited:
- EP-A- 0 405 439
- EP-A- 0 508 649
- EP-A- 0 605 105
- EP-A- 0 622 388
- DE-A- 2 415 150
- CHEMICAL ABSTRACTS, vol. 71, no. 13, 29 December 1969 Columbus, Ohio, US; abstract no. 125255j, KATSUSHIMA ET AL : "FLUORINE CONTAINING POLYURETHANES" page 31; column 2; XP002001480 & JP,A,44 020 639 (DAIKIN)

## Description

This invention relates to rigid polyurethane or urethane-modified polyisocyanurate foams and to processes for their preparation.

Rigid polyurethane and urethane-modified polyisocyanurate foams are in general prepared by reacting the appropriate polyisocyanate and isocyanate-reactive compound (usually a polyol) in the presence of a blowing agent. One use of such foams is as a thermal insulation medium in buildings, refrigerators and other domestic appliances.

Surface-active materials or foam stabilisers are essential ingredients in the manufacture of rigid polyurethane foams. They serve to facilitate mixing of the components, to control the size of the foam cells and to stabilise the rising foam.
Often these surfactants are silicone based. A major disadvantage of these materials is their cost. Therefore it is desirable to use formulations for preparing polyurethane foam not containing silicone-based surfactants.

WO 95/16721 describes the use of a specifically developed non-silicone polyether surfactant in the preparation of polyurethane foams.

It is an object of the present invention to provide rigid polyurethane foams made without using silicone-based surfactants.
It is a further object of the present invention to prepare rigid polyurethane foams not containing any silicone-based surfactant using ingredients known in the art for the preparation of polyurethane foams.

According to the present invention rigid polyurethane and urethane-modified polyisocyanurate foams are provided, prepared by reacting a polyisocyanate composition with a polyfunctional isocyanate-reactive composition in the presence of a blowing agent and in the absence of a silicone-based surfactant wherein the polyfunctional isocyanate-reactive composition comprises an amine-initiated polyether polyol having an OH value in the range 300 to 1000 mg KOH/g and an ethyleneoxide capped block copolymer polyether polyol as described below.

Although prepared in the absence of silicone-based surfactants the foams of the present invention have a fine uniform cell structure. Further the foams of the present invention have a more isotropic structure resulting in a much stronger foam especially in the weakest direction (in general, for free rise foam, perpendicular to the direction of rise) with improved dimensional stability and a lower minimum stable density compared to the foams of the prior art made in the presence of silicone-based surfactants.

The amine-initiated polyether polyol for use in the present invention is the reaction product of alkylene oxides, for example ethylene oxide and/or propylene oxide with an amine initiator containing from 2 to 8 active hydrogen atoms per molecule. Suitable amine initiators include ethylene diamine, ethanolamine, N-methyl ethanolamine, N-ethyl ethanolamine, diethanolamine, triethanolamine, triisopropanolamine, ammonia, tolylene diamine, diaminodiphenylmethane and polymethylene polyphenylene polyamines. Aromatic amine initiatores are preferred, particularly polymethylene polyphenylene polyamines. Co-initiators of another type can be used.

The total amount of amine-initiated polyether polyols is at least 20 % by weight based on the total isocyanate-reactive compounds, preferably at least 30 % and most preferably between 40 and 80 %.

The polyfunctional isocyanate-reactive composition for use in the present invention also comprises an ethyleneoxide capped block copolymer a polyether polyol known in the art for the production of flexible polyurethane foams.

Such a polyether polyol has an average nominal functionality of 2 to 6, preferably 2 to 4 and number average molecular weight of between 1000 and 10000. The OH value of such a polyether polyol is generally in the range 20 to 80, preferably 26 to 57 mg KOH/g.

These polyether polyols are obtained by the polymerisation of a cyclic oxide, such as ethylene oxide and propylene oxide, in the presence of a polyfunctional initiator. Suitable initiators contain a plurality of active hydrogen atoms and include water and polyols, for example ethylene glycol, propylene glycol, diethylene glycol, dipropylene glycol, cyclohexane dimethanol, resorcinol, bisphenol A, glycerol, trimethylolpropane, 1,2,6-hexanetriol, pentaerythritol, sorbitol and sucrose. Mixtures of initiators and/or cyclic oxides may be used.

Said polyether polyols are block copolymers having oxyethylene blocks at the termini of the polyethers. Such block copolymers are referred to as ethyleneoxide capped polyols. The oxyethylene content of these preferred ethyleneoxide capped polyols is preferably at least 7 % by weight of the total oxyalkylene units.

The total amount of polyether polyol known in the art for the production of flexible polyurethane foams is between 1 and 25 %, preferably between 1 and 15 %, most preferably between 1 and 10 % by weight based on the total isocyanate-reactive components.

According to a further preferred embodiment of the present invention the polyisocyanate composition for use in the present process comprises the reaction product of a stoichiometric excess of an organic polyisocyanate and (a) substantially fluorinated isocyanate-reactive compound(s).

The term substantially fluorinated isocyanate-reactive compound as used herein is to be understood to refer to any organic compound having at least one isocyanate-reactive functional group in which at least 50 % of those hydrogen atoms bonded to carbon atoms in the corresponding unfluorinated compound are replaced by fluorine atoms.

Reaction products of organic polyisocyanates and substantially fluorinated isocyanate-reactive compounds to be used in the process of the present invention are described in EP-A-0605105.

Particularly preferred substantially fluorinated isocyanate-reactive compounds are those of formula (I) 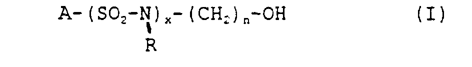 wherein A is a substantially fluorinated or perfluorinated, straight or branched chain alkyl group containing from 2 to 10 carbon atoms, n is an integer of from 1 to 11, x is 0 or 1 and R is hydrogen or a C₁₋₁₂ alkyl group or R'-OH wherein R' is a C₁₋₁₂ alkylene group.
Particular mention may be made of those compounds of formula (I) wherein n is 1 or 2, A is perfluorinated C₃₋₁₀, preferably C₆₋₈, straight or branched chain alkyl, R is hydrogen or C₁₋₄ alkyl and R' is C₁₋₄ alkylene such as (perfluoropropyl)methanol, (perfluorobutyl)methanol, (perfluoropentyl)methanol, perfluoro(hexyl)methanol, (perfluoroheptyl)methanol, (perfluorooctyl)methanol, (perfluorononyl)methanol, (perfluoroethyl)ethanol, (perfluoropropyl)ethanol, (perfluorobutyl)ethanol, (perfluoropentyl)ethanol, (perfluorohexyl)ethanol, (perfluoroheptyl)ethanol, (perfluorooctyl)ethanol, N-ethyl-N-2-hydroxyethylperfluorooctane sulfonamide, N-methyl-N-2-hydroxyethylperfluorooctane sulfonamide, N-propyl-N-2-hydroxyethylperfluorooctane sulfonamide, N-2-hydroxyethylperfluorooctane sulfonamide, N-ethyl-N-2-hydroxymethylperfluorooctane sulfonamide, N-methyl-N-2-hydroxymethylperfluorooctane sulfonamide, N-propyl-N-2-hydroxymethylperfluorooctane sulfonamide, N-2-hydroxymethylperfluorooctane sulfonamide, N-methyl-N-2-hydroxyethylperfluorooctane sulfonamide and bis-N-2-hydroxyethylperfluorooctane sulfonamide.

Suitable organic polyisocyanates with which the substantially fluorinated isocyanate-reactive compound(s) may be reacted to form the reaction product for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane.

The above polyisocyanate composition for use in the process of the present invention may be conveniently prepared by addition of a particular substantially fluorinated isocyanate-reactive compound to the organic polyisocyanate or by addition of a mixture of several different substantially fluorinated isocyanate-reactive compounds to the organic polyisocyanate, for example under the conditions well known in the art for the preparation of isocyanate-ended prepolymers.
Preferably the substantially fluorinated isocyanate-reactive compound(s) is (are) added in an amount in the range from 0.02 to 5 %, preferably 0.1 to 3 % by weight based on the weight of organic polyisocyanate.

In order to improve the stability of the polyisocyanate composition it is advantageous to use the allophanate variant of the obtained fluorinated isocyanate-ended prepolymer. This allophonate variant can be prepared by reaction of the obtained fluorinated isocyanate-ended prepolymer with the organic polyisocyanate itself in the presence of a suitable catalyst.

The polyisocyanate composition for use in the process of the present invention may comprise only one type of said reaction product or may comprise different types of said reaction product derived from different substantially fluorinated isocyanate-reactive compounds and/or different polyisocyanates.

In a preferred embodiment of the present invention the polyisocyanate composition comprises a reaction product of an organic polyisocyanate and a substantially fluorinated isocyanate-reactive compound as described above and the polyfunctional isocyanate-reactive composition comprises a polyether polyol known for manufacturing flexible polyurethane foams as described above and an amine-initiated polyether polyol known for manufacturing rigid polyurethane foams as described above.
Rigid polyurethane foams prepared by using this combination of ingredients also show good thermal insulation properties.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Further suitable polyisocyanates for use in the process of the present invention are those described in EP-A-0320134.

Further polyfunctional isocyanate-reactive compositions with which the polyisocyanate composition can be reacted to form the rigid polyurethane or urethane-modified polyisocyanurate foams of the present invention include any of those known in the art for that purpose. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; and mixtures of such initiators. Other suitable polymeric polyols include polyesters (especially aromatic polyesters) obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes.

The quantities of the polyisocyanate compositions and the polyfunctional isocyanate-reactive compositions to be reacted will depend upon the nature of the rigid polyurethane or urethane-modified polyisocyanurate foam to be produced and will be readily determined by those skilled in the art.

The process of the present invention is carried out in the presence of any of the blowing agents known in the art for the preparation of rigid polyurethane or urethane-modified polyisocyanurate foams. Such blowing agents include water or other carbon dioxide-evolving compounds, or inert low boiling compounds having a boiling point of above -70°C at atmospheric pressure.

Where water is used as blowing agent, the amount may be selected in known manner to provide foams of the desired density, typical amounts being in the range from 0.05 to 5 % by weight based on the total reaction system.

Suitable inert blowing agents include those well known and described in the art, for example, hydrocarbons, dialkyl ethers, alkyl alkanoates, aliphatic and cycloaliphatic hydrofluorocarbons, hydrochlorofluorocarbons, chlorofluorocarbons, hydrochlorocarbons and fluorine-containing ethers.

Examples of preferred blowing agents include n-pentane, isopentane, cyclopentane and any mixture thereof, 11-dichloro-2-fluoroethane (HCFC 141b), 1,1,1-trifluoro-2-fluoroethane (HFC 134a), chlorodifluoromethane (HCFC 22), 1,1-difluoro-3,3,3-trifluoropropane (HFC 245fa), 1,1-difluoroethane (HFC 15a), 1,1,1,2,3,3,-hexafluoropropane (HFC 236ea), 1,1,1,4,4,4-hexafluorobutane (HFC 356mfa), 1,1,1,3,3-pentafluorobutane (HFC 36mfa), difluoromethane (HFC 32) and blends thereof, including blends of hydrocarbons and hydrochlorofluorocarbons and/or hydrofluorocarbons. Particular mention may be made of blowing agent mixtures as described in PCT Patent Publication No. 96/12758, for manufacturing low density, dimensionally stable rigid polyurethane foams. These blowing agent mixtures generally comprise at least 3 and preferably at least 4 components of which preferably at least one is a (cyclo)alkane (preferably of 5 or 6 carbon atoms) and/or acetone.

The total quantity of blowing agent to be used in a reaction system for producing cellular polymeric materials will be readily determined by those skilled in the art, but will typically be from 2 to 25 % by weight based on the total reaction system.

The density of the foams of the present invention is generally in the range 15 to 70 kg/m³, preferably 20 to 50 kg/m³, most preferably 25 to 40 kg/m³.

In addition to the polyisocyanate and polyfunctional isocyanate-reactive compositions and the blowing agent, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, urethane catalysts, for example tin compounds such as stannous octoate or dibutyltin dilaurate or tertiary amines such as dimethylcyclohexylamine or triethylene diamine, and fire retardants, for example halogenated alkyl phosphates such as tris chloropropyl phosphate.

The foam-forming reaction mixture may also contain foam-stabilising agents or surfactants which are not silicone-based such as acetylene based surfactants, fluorinated surfactants (e.g. as described in US 5453540, US 5292716, US 5211873, US 5210106, US 5162385 and in 'Organofluorine Chemistry' by R. Banks, B. Smart, J. Tatlow, Chapters 11, 14, 17, 20, 21, 22), chlorylated or propoxylated nonyl phenols, ethoxylated or propoxylated C₆-C₂₆ monols, cationic or anionic surfactants, or others as described in 'Handbook of surfactants', 1991, by Porter, Chapters 6 to 12.
Addition of such surfactants may improve the thermal insulation properties of the foams of the present invention.

Another additive which may be used in the process of the present invention is an insoluble fluorinated compound yielding foams having smaller cell sizes and improved thermal insulation.
The term insoluble as used herein with respect to the insoluble fluorinated compound is defined as showing a solubility in either the isocyanate-reactive composition or the polyisocyanate composition with which it is to be blended of less than 500 ppm by weight at 25°C and atmospheric pressure. Insoluble fluorinated compounds for use in the process of the invention include any of those disclosed in US Patent No. 4,981,879, US Patent No. 5,034,424, US Patent No. 4,972,002, European Patent Applications Nos 0508649 and 0498628 and PCT Patent Application No. 95/18176.
It is preferred to use an insoluble, substantially fluorinated or perfluorinated compound having a boiling point of at least 20°C at atmospheric pressure.
The term substantially fluorinated as used herein with reference to the insoluble, substantially fluorinated compound used in the process of the invention is to be understood to embrace compounds in which at least 50 % of the hydrogen atoms of the unfluorinated compounds are replaced by fluorine.
Suitable compounds include substantially fluorinated or perfluorinated hydrocarbons, substantially fluorinated or perfluorinated ethers, substantially fluorinated or perfluorinated tertiary amines, substantially fluorinated or perfluorinated amino-ethers and substantially fluorinated or perfluorinated sulphones.
Suitable examples of substantially fluorinated or perfluorinated hydrocarbons are those containing from 1 to 15 carbon atoms, which may be either cyclic or acyclic, either aromatic or aliphatic and either saturated or unsaturated, such as substantially fluorinated and perfluorinated methane, ethane, propane, butane, pentane, hexane, heptane, octane, nonane, decane, cyclobutane, cyclooctane, cyclohexane, cyclopentane, cycloheptane, norbornadiene, decaline, dimethylcyclobutane, methylcyclohexane, 1-methyldecaline, phenanthrene, dimethylcyclobutane, and isomers thereof. Particular mention may be made of the various isomers of perfluoropentane and perfluorohexane such as perfluoro-n-pentane and perfluoro-n-hexane and of hexafluoropropene dimers and trimers such as perfluoro(4-methylpent-2-ene).
Certain insoluble fluorinated compounds suitable for use in the process of the invention may themselves act as blowing agents under the conditions pertaining to the foam-forming reaction, particularly where their boiling point is lower than the exotherm temperature achieved by the reaction mixture. For the avoidance of doubt, such materials may, partly or completely, fulfil the function of blowing agent in addition to that of insoluble fluorinated compound.
The amount of the insoluble fluorinated compound used in the process of the present invention ranges from 0.05 to 10 %, preferably from 0.1 to 5 %, most preferably from 0.6 to 2.3 % by weight based on the total foam-forming composition.
The insoluble fluorinated compound will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents, for example fluoro surfactants.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

The various aspects of this invention are illustrated, but not limited by the following examples in which the following ingredients are used:
DALTOLAC R 180: a non-amine initiated polyether polyol available from Imperial Chemical Industries (f 4.5, OH value 440 mg KOH/g).
DALTOLAC R 260: a non-amine initiated polyether polyol available from Imperial Chemical Industries (OH value 310 mg KOH/g).
DALTOLAC R 130: a non-amine initiated polyether polyol available from Imperial Chemical Industries (OH value 460 mg KOH/g).
DALTOLAC R 200: a non-amine initiated polyether polyol available from Imperial Chemical Industries (OH value 380 mg KOH/g).
DALTOLAC R 090: a non-amine initiated polyether polyol available from Imperial Chemical Industries (OH value 540 mg KOH/g).
POLYOL X: a polyether polyol (f 3.2, OH value 495 mg KOH/g) initiated by polymethylene polyphenylene polyamine.
POLYOL Y: a polyether polyol (OH value 310 mg KOH/g) initiated by polymethylene polyphenylene polyamine.
DALTOCEL F 455: an ethyleneoxide-capped polyether polyol available from Imperial Chemical Industries (OH value 53-57 mg KOH/g).
DALTOCEL F 428: an ethyleneoxide-capped polyether polyol available from Imperial Chemical Industries (OH value 26-30 mg KOH/g).
DALTOCEL F 430: an ethyleneoxide-capped polyether polyol available from Imperial Chemical Industries (OH value 28-32 mg KOH/g).
DALTOCEL F 436: an ethyleneoxide-capped polyether polyol available from Imperial Chemical Industries (OH value 24-38 mg KOH/g).
DALTOCEL F 452: an ethyleneoxide-capped polyether polyol available from Imperial Chemical Industries (OH value 50-54 mg KOH/g).
DALTOCEL F 448: a non-ethyleneoxide-capped polyether polyol available from Imperial Chemical Industries (OH value 46-50 mg KOH/g).
POLYOL A: a polyol blend of OH value 417 mg KOH/g comprising 60 % by weight of a polyether polyol initiated with polymethylene polyphenylene polyamines.
POLYOL B: a polyol blend of OH value 417 mg KOH/g comprising sucrose-initiated polyether polyols.
POLYOL C: a polyol blend of OH value 417 mg KOH/g comprising sorbitol-initiated polyether polyols.
PPG 425: polypropyleneglycol (MW 425).
Polycat 8: a catalyst available from Air Products.
Polycat 5: a catalyst available from Air Products.
NIAX A1: a catalyst available from Union Carbide.
SFB: a catalyst available from Imperial Chemical Industries.
L 6900: a silicone surfactant available from OSi.
B 1400A: a silicone surfactant available from Goldschmidt.
B 8461: a silicone surfactant available from Goldschmidt.
SURFYNOL: non silicone containing surfactants available from Air Products.
emulsifier: perfluorinated C₆-C₁₂ isomer mixture containing unsaturated bonds.
SUPRASEC DNR: polymeric MDI available from Imperial Chemical Industries.
SUPRASEC 2021: an MDI prepolymer available from Imperial Chemical Industries.
PREPOLYMER: a polyisocyanate composition obtained by reacting SUPRASEC DNR with 0.1 % by weight (based on the polyisocyanate) of FC10, a perfluorooctane sulfonamide available from 3M.
DALTOLAC, DALTOCEL and SUPRASEC are trademarks of Imperial Chemical Industries.

### EXAMPLE 1

Rigid foams were prepared from the ingredients listed below in Table 1. The reaction profile is followed in respect of cream time, string time and end of rise time.
Following properties are measured: core density (according to standard DIN 53420), initial Lambda value at 10°C (according to standard ISO 2581) and compression strength (according to standard DIN 53421) in the direction of rise and perpendicular to rise. The results are listed in Table 1.

These results show that for a similar density and reaction profile foams of the present invention (Foams nos. 2 and 3) have a more isotropic structure and higher compression strengths especially in the direction perpendicular to rise than the reference foam (No. 1) containing a silicone-based surfactant. Further it is observed that Foam No. 1 shrinks while Foams Nos 2 and 3 don't shrink at all. Additional use of a fluorinated isocyanate-ended prepolymer (Foam No. 3) leads to improved thermal insulation (Lambda).

### EXAMPLE 2

Rigid foams were prepared at an NCO index of 105 from the ingredients listed in Table 2.
Foams 5 to 12 all collapsed while Foams 1 to 4 had a good foam structure, especially Foams 3 and 4.

**Table 1**

| Foam No. | | 1 | 2 | 3 |
|---|---|---|---|---|
| POLYOL | | | | |
| DALTOLAC R180 | pbw | 20 | 20 | 20 |
| POLYOL X | pbw | 80 | 80 | 80 |
| DALTOCEL F455 | pbw | 0 | 2 | 2 |
| Polycat 8 | pbw | 1 | 1 | 1 |
| Polycat 5 | pbw | 0.3 | 0.3 | 0.3 |
| L 6900 | pbw | 2.5 | 0 | 0 |
| water | pbw | 1.63 | 1.63 | 1.63 |
| HCFC 141b | pbw | 33.5 | 33.5 | 33.5 |

| ISOCYANATE | | | | |
|---|---|---|---|---|
| SUPRASEC DNR | pbw | 155.78 | 155.28 | 0 |
| PREPOLYMER | pbw | 0 | 0 | 155.57 |
| Index | | 108 | 108 | 108 |

| REACTION PROFILE | | | | |
|---|---|---|---|---|
| Cream time | sec | 11 | 10 | 10 |
| String time | sec | 50 | 50 | 47 |
| End of rise time | sec | 130 | 125 | 130 |
| Core density | kg/m³ | 26.3 | 26.9 | 27.5 |
| Initial Lambda | mW/mK | 19.5 | 21.0 | 19.1 |

| Compression strength | | | | |
|---|---|---|---|---|
| Rise | kPa | 83 | 105 | 112 |
| Perpendicular 1 | kPa | 65 | 92 | 115 |
| Perpendicular 2 | kPa | 178 | 117 | 141 |

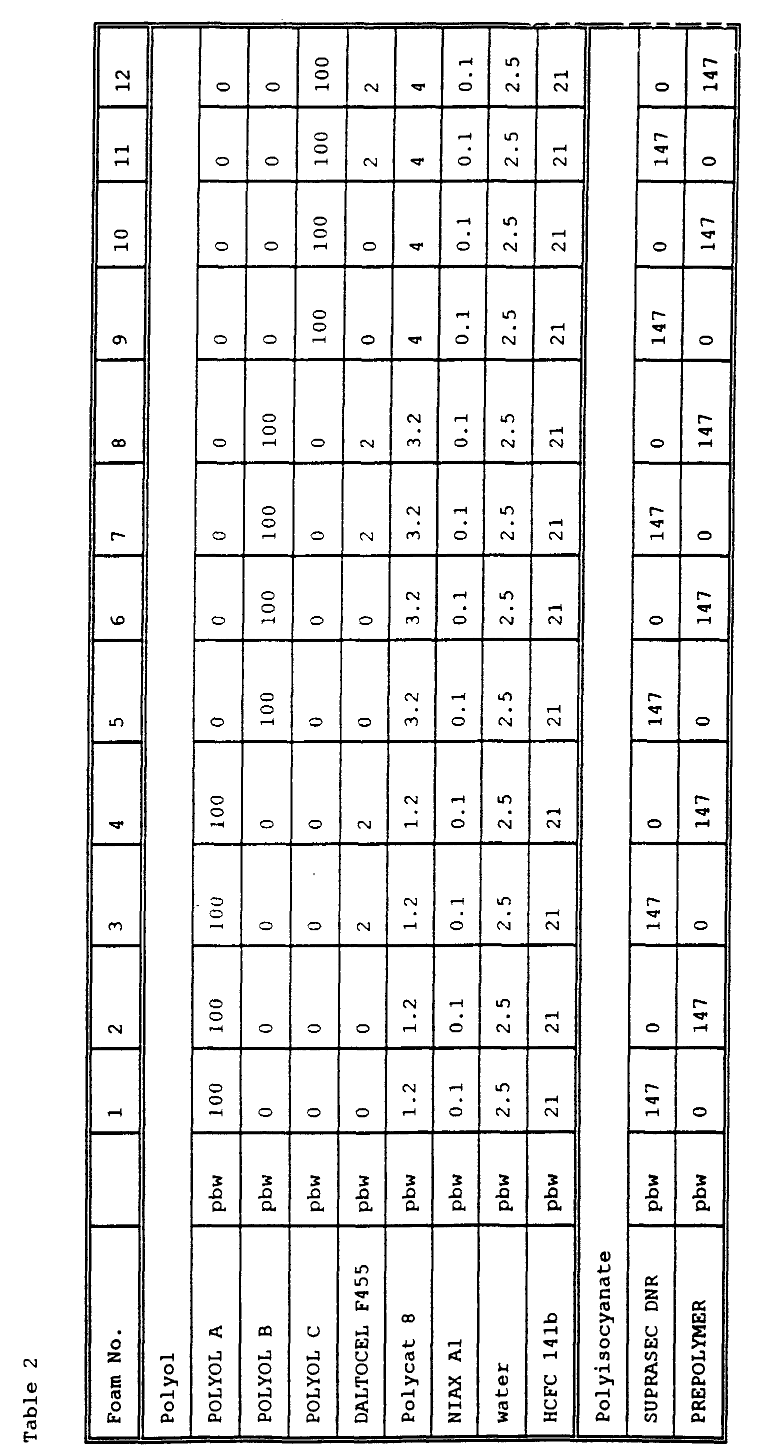

### Example 3

Rigid foams were prepared from the ingredients listed below in Table 3. The results presented in Table 3 show that the presence of an amine-initiated polyether polyol is necessary in a silicone-free formulation (Foam 15 compared to Foam 14). Stable lower density foam can be obtained by the present invention (Foam 15 compared to Foam 13).

**Table 3**

| Foam No. | | 13 | 14 | 15 |
|---|---|---|---|---|
| POLYOL | | | | |
| DALTOLAC R130 | pbw | 28.7 | 28.7 | 0 |
| POLYOL X | pbw | 0 | 0 | 28.7 |
| DALTOLAC R200 | pbw | 33.4 | 33.4 | 33.4 |
| PPG 425 | pbw | 9.6 | 9.6 | 0 |
| DALTOCEL F455 | pbw | 0 | 0 | 9.6 |
| B 1400A | pbw | 1.6 | 0 | 0 |
| NIAX A1 | pbw | 0.18 | 0.18 | 0.18 |
| SFB | pbw | 0.29 | 0.29 | 0.29 |
| Polycat 8 | pbw | 0.4 | 0.4 | 1.2 |
| water | pbw | 3.65 | 3.65 | 3.65 |

| ISOCYANATE | | | | |
|---|---|---|---|---|
| SUPRASEC DNR | pbw | 141.3 | 0 | 0 |
| PREPOLYMER | pbw | 0 | 141.25 | 139.1 |
| Foam quality | | good | collaps | good |
| Density | kg/m³ | 32 | | 29 |
| Stability | | good | | good |

### Example 4

Rigid polyurethane foams were prepared from the ingredients listed in Table 4. Foam properties were measured. The results are presented in Table 4.

**Table 4 -**

| Foam No. | | 16 | 17 |
|---|---|---|---|
| POLYOL | | | |
| DALTOLAC R130 | pbw | 28.7 | 0 |
| POLYOL X | pbw | 0 | 28.7 |
| DALTOLAC R200 | pbw | 33.4 | 33.4 |
| PPG 425 | pbw | 9.6 | 0 |
| DALTOCEL F455 | pbw | 0 | 9.6 |
| DALTOLAC R090 | pbw | 9.6 | 9.6 |
| B 1400A | pbw | 1.6 | 0 |
| NIAX A1 | pbw | 0.18 | 0.18 |
| SFB | pbw | 0.29 | 0.29 |
| Polycat 8 | pbw | 0.7 | 0.35 |
| water | pbw | 5 | 5.2 |

| ISOCYANATE | | | |
|---|---|---|---|
| SUPRASEC DNR | pbw | 162.41 | 0 |
| PREPOLYMER/SUPRASEC 2021 80/20 | pbw | 0 | 171.8 |
| Density | kg/m² | 25 | 26 |
| Overpack | % | 5 | 5 |

| Compression strength | | | |
|---|---|---|---|
| Height | kPa | 80.4 | 83.5 |
| Width | kPa | 66.9 | 112.0 |
| Length | kPa | 132.4 | 111.4 |
| Mean | kPa | 93.2 | 102.3 |

### Example 5

Rigid polyurethane foams were prepared from the ingredients listed in Table 5. Foam properties were measured. The results as presented in Table 5 illustrate the improvement in thermal insulation when an additional non-silicone surfactant is being used.

**Table 5**

| Foam No. | | 18 | 19 |
|---|---|---|---|
| POLYOL | | | |
| POLYOL X | pbw | 21 | 21 |
| POLYOL Y | pbw | 38 | 38 |
| DALTOLAC R180 | pbw | 35.4 | 35.4 |
| DALTOCEL F428 | pbw | 2 | 2 |
| NIAX A1 | pbw | 0.3 | 0.3 |
| Polycat 8 | pbw | 1.3 | 1.3 |
| cyclopentane | pbw | 14 | 14 |
| emulsifier | pbw | 0 | 3 |
| water | pbw | 2.33 | 2.33 |

| ISOCYANATE | | | |
|---|---|---|---|
| PREPOLYMER | pbw | 143 | 145 |
| Density | kg/m³ | 25.8 | 26.8 |
| Lambda value | mW/mK | 22.2 | 20.6 |

### Example 6

Rigid polyurethane foams were prepared from the ingredients listed in Table 6. Foam properties were measured. The results as presented in Table 6 illustrate the improvement in compression strength by the foams of the present invention.

**Table 6**

| Foam No. | | 20 | 21 |
|---|---|---|---|
| POLYOL | | | |
| POLYOL X | pbw | 21 | 21 |
| POLYOL Y | pbw | 38 | 38 |
| DALTOLAC R180 | pbw | 35.4 | 35.4 |
| DALTOCEL F428 | pbw | 0 | 2 |
| B 8461 | pbw | 2 | 0 |
| NIAX A1 | pbw | 0.3 | 0.3 |
| Polycat 8 | pbw | 1.3 | 1.3 |
| cyclopentane | pbw | 14 | 14 |
| water | pbw | 2.33 | 2.33 |

| ISOCYANATE | | | |
|---|---|---|---|
| SUPRASEC DNR | pbw | 142.8 | 143.1 |
| Density | kg/m³ | 25.3 | 24.8 |

| Compression strength | | | |
|---|---|---|---|
| Height | kPa | 106.3 | 99.0 |
| Width | kPa | 76.6 | 98.1 |
| Length | kPa | 94.0 | 85.6 |
| Mean | kPa | 93.1 | 94.4 |
| Lambda value | mW/mK | 21.7 | 22.4 |

### Example 7

Rigid polyurethane foams were prepared from the ingredients listed in Table 7. Foam properties were measured. The results are presented in Table 7.

**Table 7**

| Foam No. | | 22 | 23 | 24 | 25 | 26 |
|---|---|---|---|---|---|---|
| POLYOL | | | | | | |
| POLYOL X | pbw | 21 | 21 | 21 | 21 | 21 |
| POLYOL Y | pbw | 38 | 38 | 38 | 38 | 38 |
| DALTOLAC R180 | pbw | 35.4 | 35.4 | 35.4 | 35.4 | 35.4 |
| DALTOCEL F428 | pbw | 2 | 2 | 2 | 2 | 2 |
| SURFYNOL 420 | pbw | 0 | 2 | 0 | 0 | 0 |
| SURFYNOL 440 | pbw | 0 | 0 | 2 | 0 | 0 |
| SURFYNOL 465 | pbw | 0 | 0 | 0 | 2 | 0 |
| SURFYNOL 485 | pbw | 0 | 0 | 0 | 0 | 2 |
| NIAX A1 | pbw | 0.3 | 0.3 | 0.3 | 0.3 | 0.3 |
| Polycat 8 | pbw | 1.3 | 1.3 | 1.3 | 1.3 | 1.3 |
| cyclopentane | pbw | 14 | 14 | 14 | 14 | 14 |
| water | pbw | 2.33 | 2.33 | 2.33 | 2.33 | 2.33 |

| ISOCYANATE | | | | | | |
|---|---|---|---|---|---|---|
| SUPRASEC DNR | pbw | 143.1 | 143.1 | 143.1 | 143.1 | 143.1 |
| Density | kg/m³ | 30.5 | 30.6 | 30.3 | 30.0 | 30.3 |

| Compression strength | | | | | | |
|---|---|---|---|---|---|---|
| Height | kPa | 127.9 | 125.4 | 133.4 | 126.6 | 123.8 |
| Width | kPa | 111.7 | 119.1 | 107.3 | 105.9 | 106.5 |
| Length | kPa | 114.2 | 123.4 | 108.8 | 114.4 | 102.8 |
| Mean | kPa | 118.1 | 122.7 | 117.1 | 115.9 | 111.4 |
| Lambda value | mW/mK | 22.2 | 22.3 | 21.8 | 22.1 | 23.1 |

### Example 8

Rigid foams were prepared at an NCO index of 112 from the ingredients listed below in Table 8.
The results presented in Table 8 show that more isotropic foams are obtained by using the process of the present invention.

**Table 8**

| Foam No. | | 27 | 28 | 29 |
|---|---|---|---|---|
| POLYOL | | | | |
| POLYOL X | pbw | 21 | 21 | 21 |
| POLYOL Y | pbw | 38 | 38 | 38 |
| DALTOLAC R180 | pbw | 35.4 | 35.4 | 35.4 |
| DALTOCEL F428 | pbw | 0 | 0 | 2 |
| B 8461 | pbw | 2 | 0 | 0 |
| NIAX A1 | pbw | 0.3 | 0.3 | 0.3 |
| Polycat 8 | pbw | 1.3 | 1.3 | 1.3 |
| cyclopentane | pbw | 12 | 14 | 14 |
| water | pbw | 2 | 2.33 | 2.33 |

| ISOCYANATE | | | | |
|---|---|---|---|---|
| SUPRASEC DNR | pbw | 137.0 | 143.0 | 0 |
| PREPOLYMER | pbw | 0 | 0 | 143.0 |
| Core density | kg/m³ | 32.6 | 29.9 | 29.7 |
| Flow | cm/g | 0.30 | 0.33 | 0.34 |

| Compression strength | | | | |
|---|---|---|---|---|
| Rise | kPa | 166 | 132 | 142 |
| Length | kPa | 179 | 139 | 159 |
| Width | kPa | 146 | 132 | 144 |

### Example 9

Rigid foams were prepared from the ingredients listed below in Table 9. The results presented in Table 9 show that it is beneficial to use a polyether polyol known for the preparation of flexible polyurethane foams that has an ethyleneoxide tip.

**Table 9**

| Foam No. | | 30 | 31 | 32 | 33 | 34 | 35 |
|---|---|---|---|---|---|---|---|
| POLYOL | | | | | | | |
| POLYOL X | pbw | 21 | 21 | 21 | 21 | 21 | 21 |
| POLYOL Y | pbw | 38 | 38 | 38 | 38 | 38 | 38 |
| DALTOLAC R180 | pbw | 35.4 | 35.4 | 35.4 | 35.4 | 35.4 | 35.4 |
| DALTOCEL F428 | pbw | 2 | 0 | 0 | 0 | 0 | 0 |
| DALTOCEL F430 | pbw | 0 | 2 | 0 | 0 | 0 | 0 |
| DALTOCEL F436 | pbw | 0 | 0 | 2 | 0 | 0 | 0 |
| DALTOCEL F448 | pbw | 0 | 0 | 0 | 2 | 0 | 0 |
| DALTOCEL F452 | pbw | 0 | 0 | 0 | 0 | 2 | 0 |
| DALTOCEL F455 | pbw | 0 | 0 | 0 | 0 | 0 | 2 |
| NIAX A1 | pbw | 0.3 | 0.3 | 0.3 | 0.3 | 0.3 | 0.3 |
| Polycat 8 | pbw | 1.3 | 1.3 | 1.3 | 1.3 | 1.3 | 1.3 |
| cyclopentane | pbw | 14 | 14 | 14 | 14 | 14 | 14 |
| water | pbw | 2.33 | 2.33 | 2.33 | 2.33 | 2.33 | 2.33 |

| ISOCYANATE | | | | | | | |
|---|---|---|---|---|---|---|---|
| PREPOLYMER | pbw | 143.0 | 143.0 | 143.0 | 143.0 | 143.0 | 143.0 |
| Foam quality | | good | good | okay | coarse | okay | okay |

### Example 10

Rigid foams were prepared from the ingredients listed below in Table 10.
The results presented in Table 10 illustrate the effect of the amine-initiated polyether polyol amount thereof;.

### Example 11

Rigid foams were prepared from the ingredients listed below in Table 11.
The results presented in Table 11 illustrate the effect of the amine-initiated polyether polyol.

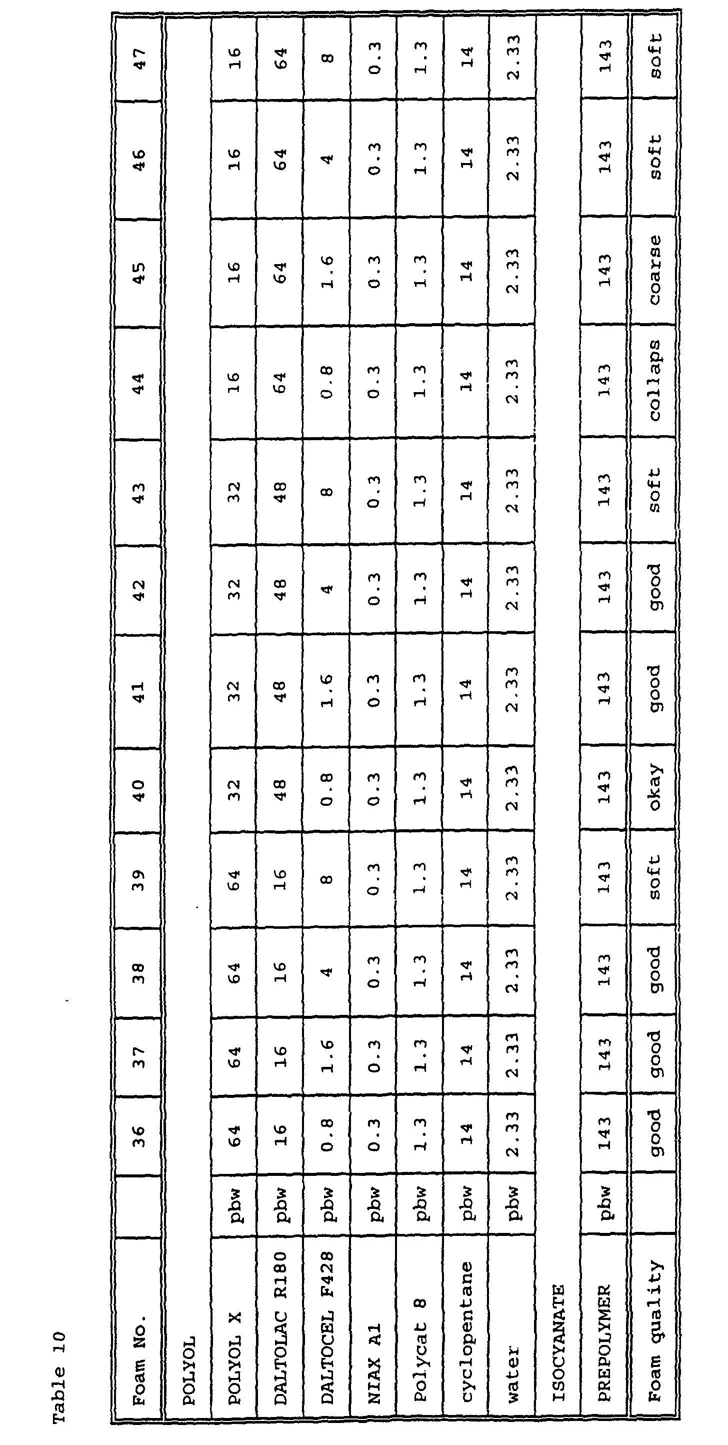

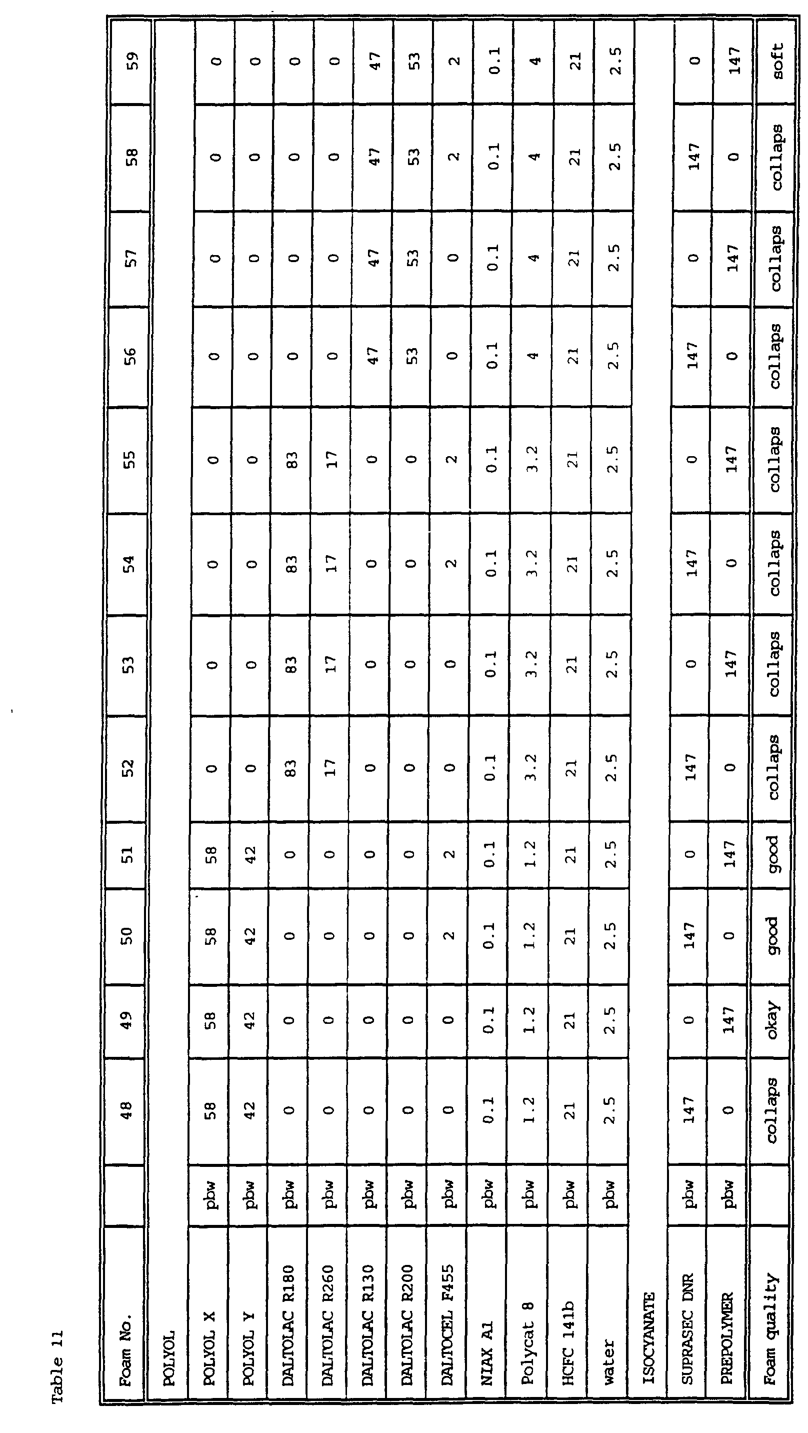

### Example 12

Rigid foams were prepared at an NCO index of 108 from the ingredients listed below in Table 12.
The results presented in Table 12 show that more stable foams (dimensional stability measured according to standard ISO 2796) at lower densities can be obtained using the process of the present invention. Also the flow is improved. Thermal insulation properties can be further improved by using a non-silicone surfactant.

**Table 12**

| Foam No. | | 60 | 61 | 62 |
|---|---|---|---|---|
| POLYOL | | | | |
| POLYOL X | pbw | 80 | 80 | 80 |
| DALTOLAC R180 | pbw | 20 | 20 | 20 |
| DALTOCEL F428 | pbw | 0 | 2.5 | 2.5 |
| L 6900 | pbw | 2.5 | 0 | 0 |
| Polycat 8 | pbw | 1 | 1 | 1 |
| Polycat 5 | pbw | 0.3 | 0.3 | 0.3 |
| HCFC 141b | pbw | 33.5 | 37 | 37 |
| water | pbw | 1.63 | 2 | 2 |

| ISOCYANATE | | | | |
|---|---|---|---|---|
| SUPRASEC DNR | pbw | 155.28 | 161.36 | 0 |
| PREPOLYMER | pbw | 0 | 0 | 161.36 |
| emulsifier | pbw | 0 | 0 | 3.23 |
| Overall density | kg/m³ | 31.8 | 28.5 | 28.5 |
| Flow | cm/g | 0.31 | 0.35 | 0.36 |

| Compression strength | | | | |
|---|---|---|---|---|
| Rise | kPa | 70.5 | 94.7 | 86 |
| Length | kPa | 160.3 | 107.4 | 115.8 |
| Width | kPa | 86.8 | 106.8 | 105.1 |

| Dimensional Stability | | | | |
|---|---|---|---|---|
| 1 day -20°C | % | 6.95 | 0.09 | 0.16 |
| 1 day 70°C | % | 1.53 | 0.91 | 0.77 |
| 1 day 100°C | % | 2.08 | 1.63 | 1.62 |
| 1 day 70°C/100 % RH | % | 4.56 | 4.19 | 4.49 |
| 14 days -20°C | % | 17.8 | 0.61 | 0.28 |
| 14 days 70°C | % | 2.98 | 2.98 | 3.01 |
| 14 days 100°C | % | 3.88 | 4.23 | 4.32 |
| 14 days 70°C/100% RH | % | 6.98 | 3.8 | 7.49 |

| Lambda value | | | | |
|---|---|---|---|---|
| initial | mW/mK | 17.2 | 18.1 | 17.4 |
| 1 week/70°C | mW/mK | 19.5 | | |
| 3 weeks/70°C | mW/mK | 21.2 | 22.1 | 21 |
| 5 weeks/70°C | mW/mK | 22.3 | 22.9 | 22.2 |

## Claims

1. Process for preparing a rigid polyurethane or urethane-modified polyisocyanurate foam comprising the step of reacting a polyisocyanate composition with a polyfunctional isocyanate-reactive composition in the absence of a silicone-based surfactant **characterised in that** the polyfunctional isocyanate-reactive composition comprises an amine-initiated polyether polyol having an OH value in the range 300 to 1000 mg KOH/g and further comprises an ethyleneoxide capped block copolymer polyether polyol of average nominal functionality 2 to 6 and number average molecular weight between 1000 and 10000.

2. Process according to claim 1 wherein the amine-initiated polyether polyol is the reaction product of alkylene oxides with an amine initiator containing from 2 to 8 active hydrogen atoms per molecule.

3. Process according to claim 2 wherein the amine initiator is an aromatic amine.

4. Process according to claim 3 wherein the amine initiator is polymethylene polyphenylene polyamine.

5. Process according to any one of the preceding claims wherein the amine-initiated polyether polyol is present in an amount of at least 20 % by weight based on the total isocyanate-reactive compounds.

6. Process according to any one of the preceding claims wherein the ethyleneoxide capped block copolymer has an average nominal functionality of 2 to 4.

7. Process according to any one of the preceding claims wherein the ethyleneoxide capped block copolymer has an OH value of between 20 and 80 mg KOH/g.

8. Process according to any one of the preceding claims wherein the ethyleneoxide capped block copolymer is a poly(oxyethylene-oxypropylene)diol or triol obtained by the simultaneous or sequential addition of ethylene and propylene oxides to di- or trifunctional initiators.

9. Process according to claim 8 wherein said di- or trifunctional initiators are selected from the group consisting of ethylene glycol, diethylene glycol, dipropylene glycol and glycerol.

10. Process according to any one of the preceding claims wherein the oxyethylene content of the ethyleneoxide capped block copolymer is at least 7 % by weight based on the total oxyalkylene units.

11. Process according to any one of the preceding claims wherein said ethyleneoxide capped block copolymer is used in amounts ranging from 1 to 25 % by weight based on the total isocyanate-reactive components.

12. Process according to any one of the preceding claims wherein the polyisocyanate composition comprises the reaction product of a stoichiometric excess of an organic polyisocyanate and (a) substantially fluorinated isocyanate-reactive compound(s) which is a compound having at least one isocyanate-reactive functional group in which at least 50 % of those hydrogen atoms bonded to carbon atoms in the corresponding unfluorinated compound are replaced by fluorine atoms.

13. Process according to claim 12 wherein said substantially fluorinated isocyanate-reactive compound corresponds to the formula (I)
A-(SO₂-NR)ₓ-(CH₂)ₙ-OH (I)
wherein
A is a substantially fluorinated or perfluorinated, straight or branched chain alkyl group containing from 2 to 10 carbon atoms;
n is an integer of from 1 to 11;
x is 0 or 1; and
R is hydrogen or a C₁₋₁₂ alkyl group or R'-OH wherein R' is a C₁₋₁₂ alkylene group.

14. Process according to claim 13 wherein n is 1 or 2, A is perfluorinated C₃₋₁₀ straight or branched chain alkyl, R is hydrogen or C₁₋₄ alkyl and R' is C₁₋₄ alkylene.

15. Process according to claim 13 or 14 wherein the organic polyisocyanate with which the substantially fluorinated isocyanate-reactive compound is reacted is diphenylmethane diisocyanate in the form of its 2,4'-, 2,2'- or 4,4'-isomers or mixtures thereof or polymethylene polyphenylene polyisocyanates.

16. Process according to any one of claims 13 to 15 wherein the substantially fluorinated isocyanate-reactive compound is used in an amount in the range from 0.02 to 5 % by weight based on the weight of the organic polyisocyanate.

17. Process according to any one of the preceding claims wherein the process is carried out in the presence of a blowing agent selected from the group comprising hydrocarbons and hydrofluorocarbons.

18. Process according to any one of the preceding claims wherein the foam forming formulation contains a surfactant which is not silicone based.

19. Rigid polyurethane or urethane-modified polyisocyanurate foam obtainable by the process as defined in any one of the preceding claims.

## Patentansprüche

1. Verfahren zur Herstellung von Polyurethan- und urethanmodifizierten Polyisocyanurathartschaumstoffen, welches den Schritt der Reaktion einer Polyisocyanatzusammensetzung mit einer polyfunktionellen isocyanatreaktiven Zusammensetzung in Abwesenheit eines oberflächenaktiven Mittels auf Silikonbasis umfasst,
**dadurch gekennzeichnet, dass**
die polyfunktionelle isocyanatreaktive Zusammensetzung ein amininitiiertes Polyetherpolyol mit einem OH-Wert im Bereich von 300 bis 1000 mg KOH/g umfasst und zusätzlich ein Polyetherpolyol aus ethylenoxidgeschütztem Blockcopolymer umfasst, welches eine nominale Funktionalität von 2 bis 6 und eine zahlengemittelte relative Molekülmasse zwischen 1000 und 10000 aufweist.

2. Verfahren gemäß Anspruch 1, wobei das amininitiierte Polyetherpolyol das Reaktionsprodukt eines Alkylenoxids mit einem Amininitiator ist, der 2 bis 8 aktive Wasserstoffatome pro Molekül enthält.

3. Verfahren gemäß Anspruch 3, wobei der Amininitiator ein aromatische Amin ist.

4. Verfahren gemäß Anspruch 3, wobei der Amininitiator ein Polymethylenpolyphenylenpolyamin ist.

5. Verfahren gemäß irgendeinem der vorhergehenden Ansprüche, wobei das amininitiierte Polyetherpolyol in einer Menge von wenigstens 20 Masse-% vorhanden ist, basierend auf den gesamten isocyanatreaktiven Verbindungen.

6. Verfahren gemäß irgendeinem der vorhergehenden Ansprüche, wobei das ethylenoxidgeschützte Blockcopolymer eine mittlere nominale Funktionalität von 2 bis 4 aufweist.

7. Verfahren gemäß irgendeinem der vorhergehenden Ansprüche, wobei das ethylenoxidgeschützte Blockcopolymer einen OH-Wert zwischen 20 und 80 mg KOH/g aufweist.

8. Verfahren gemäß irgendeinem der vorhergehenden Ansprüche, wobei das ethylenoxidgeschützte Blockcopolymer eine Poly(oxyethylen-oxypropylen)diol oder -triol ist, das durch die gleichzeitige oder absatzweise Zugabe von Ethylen- und Propylenoxiden zu bioder trifunktionellen Initiatoren erhalten wird.

9. Verfahren gemäß Anspruch 8, wobei dieses bi- oder trifunktionellen Initiatoren aus der Gruppe ausgewählt sind, die aus Ethylenglykol, Diethylenglykol, Dipropylenglykol und Glycerin besteht.

10. Verfahren gemäß irgendeinem der vorhergehenden Ansprüche, wobei der Oxyethylengehalt des ethylenoxidgeschützten Blockcopolymers wenigstens 7 Masse-% beträgt, basierend auf den gesamten Oxyalkyleneinheiten.

11. Verfahren gemäß irgendeinem der vorhergehenden Ansprüche, wobei das ethylenoxidgeschützte Blockcopolymer in Mengen im Bereich von 1 bis 25 Masse-% eingesetzt wird, basierend auf den gesamten isocyanatreaktiven Komponenten.

12. Verfahren gemäß irgendeinem der vorhergehenden Ansprüche, wobei die Polyisocyanatzusammensetzung das Reaktionsprodukt eines stöchiometrischen Überschusses an organischem Polyisocyanat mit einem oder mehreren im Wesentlichen fluorierte(n) isocyanatreaktive(n) Verbindung(en) umfasst, welche eine Verbindung mit wenigstens einer isocyanatreaktiven funktionellen Gruppe ist und in welcher wenigstens 50 % der an Kohlenstoffatome gebundenen Wasserstoffatome in der entsprechenden nicht fluorierten Verbindung durch Fluoratome ersetzt sind.

13. Verfahren gemäß Anspruch 12, wobei die im Wesentlichen fluorierte isocyanatreaktive Verbindung der Formel (I) entspricht:
A-(SO₂-NR)ₓ-(CH₂)ₙ-OH (I)
worin
A ein im Wesentlichen fluorierter oder perfluorierter, geradkettiger oder verzweigter Alkylrest ist, der 2 bis 10 Kohlestoffatome enthält;
n gleich eine ganze Zahl von 1 bis 11 ist;
x gleich 0 oder 1 ist; und
R gleich Wasserstoff, ein C₁₋₁₂-Alkylrest oder R'-OH ist, wobei R' ein C₁₋₁₂-Alkylen ist.

14. Verfahren gemäß Anspruch 13, wobei n gleich 1 oder 2 ist, A gleich ein perfluoriertes, geradkettiges oder verzweigtes C₃₋₁₀-Alkyl ist, R gleich Wasserstoff oder ein C₁₋₄-Alkyl ist und R' gleich ein C₁₋₄-Alkylen ist.

15. Verfahren gemäß Anspruch 13 oder 14, wobei das organische Polyisocyanat, mit dem die im Wesentlichen fluorierte isocyanatreaktive Verbindung zur Reaktion gebracht wird, Diphenylmethandiisocyant in der Form seiner 2,4'-, 2,2'- oder 4,4'-Isomere oder einer Mischung davon ist oder Polymethylenpolyphenylenpolyisocyanate darstellt.

16. Verfahren gemäß irgendeinem der Ansprüche 13 bis 15, wobei die im Wesentlichen fluorierte isocyanatreaktive Verbindung in einer Menge im Bereich von 0,02 bis 5 Masse-% eingesetzt wird, basierend auf der Masse des organischen Polyisocyanats.

17. Verfahren gemäß irgendeinem der vorhergehenden Ansprüche, wobei das Verfahren in Gegenwart eines Treibmittels durchgeführt wird, das aus der Gruppe ausgewählt ist, die aus Wasserstoffkohlenstoffen und Wasserstofffluorkohlenstoffen besteht.

18. Verfahren gemäß irgendeinem der vorhergehenden Ansprüche, wobei die Formulierung zur Schaumstoff-erzeugung ein oberflächenaktives Mittel enthält, das nicht auf Silikonbasis beruht.

19. Polyurethan- oder urethanmodifizierter Polyiso-cyanurathartschaumstoff, der durch das Verfahren wie es in einem der vorhergehenden Ansprüchen definiert ist erhältlich ist.

## Revendications

1. Procédé pour la préparation d'une mousse rigide de polyuréthanne ou de polyisocyanurate à modification uréthanne, comprenant l'étape consistant à faire réagir une composition de polyisocyanate avec une composition polyfonctionnelle réactive avec les isocyanates, en l'absence d'agent tensio-actif à base de silicone, **caractérisé en ce que** la composition polyfonctionnelle réactive avec les isocyanates comprend un polyéther-polyol à initiateur amine, ayant un indice de OH compris dans l'intervalle de 300 à 1000 mg de KOH/g, et comprend en outre un polyéther-polyol copolymère séquencé à coiffe oxyde d'éthylène, ayant un fonctionnalité nominale moyenne de 2 à 6 et une moyenne en nombre du poids moléculaire comprise dans l'intervalle de 1000 à 10 000.

2. Procédé suivant la revendication 1, dans lequel le polyéther-polyol à initiateur amine est le produit de réaction d'oxydes d'alkylène avec un initiateur du type amine contenant 2 à 8 atomes d'hydrogène actifs par molécule.

3. Procédé suivant la revendication 2, dans lequel l'initiateur du type amine est une amine aromatique.

4. Procédé suivant la revendication 3, dans lequel l'initiateur du type amine est la polyméthylène- polyphénylène-polyamine.

5. Procédé suivant l'une quelconque des revendications précédentes, dans lequel le polyéther-polyol à initiateur amine est présent en une quantité d'au moins 20 % en poids sur la base des composés totaux réactifs avec les isocyanates.

6. Procédé suivant l'une quelconque des revendications précédentes, dans lequel le copolymère séquencé à coiffe oxyde d'éthylène a une fonctionnalité nominale moyenne de 2 à 4.

7. Procédé suivant l'une quelconque des revendications précédentes, dans lequel le copolymère séquencé à coiffe oxyde d'éthylène a un indice de OH compris dans l'intervalle de 20 à 80 mg de KOH/g.

8. Procédé suivant l'une quelconque des revendications précédentes, dans lequel le copolymère séquencé à coiffe oxyde d'éthylène est un poly(oxyéthylène-oxypropylène)diol ou -triol obtenu par addition simultanée ou séquentielle d'oxydes d'éthylène et de propylène à des initiateurs di- ou trifonctionnels.

9. Procédé suivant la revendication 8, dans lequel les initiateurs di- ou trifonctionnels sont choisis dans le groupe consistant en l'éthylèneglycol, le diéthylèneglycol, le dipropylèneglycol et le glycérol.

10. Procédé suivant l'une quelconque des revendications précédentes, dans lequel la teneur en oxyéthylène du copolymère séquencé à coiffe oxyde d'éthylène est au moins égale à 7 % en poids sur la base des motifs oxyalkylène totaux.

11. Procédé suivant l'une quelconque des revendications précédentes, dans lequel le copolymère séquencé à coiffe oxyde d'éthylène est utilisé en des quantités comprises dans l'intervalle de 1 à 25 % en poids sur la base des constituants totaux réactifs avec les isocyanates.

12. Procédé suivant l'une quelconque des revendications précédentes, dans lequel la composition de polyisocyanate comprend le produit de réaction d'un excès stoechiométrique d'un polyisocyanate organique et (a) d'un ou plusieurs composés substantiellement fluorés réactifs avec les isocyanates, qui consistent en un ou plusieurs composés ayant au moins un groupe fonctionnel réactif avec les isocyanates, dans lesquels au moins 50 % en poids des atomes d'hydrogène liés aux atomes de carbone dans le composé non fluoré correspondant sont remplacés par des atomes de fluor.

13. Procédé suivant la revendication 12, dans lequel le composé substantiellement fluoré réactif avec les isocyanates répond à la formule (I)
A- (SO₂-NR)ₓ-(CH₂)ₙ-OH (I)
dans laquelle
A représente un groupe alkyle à chaîne droite ou ramifiée, substantiellement fluoré ou perfluoré, contenant 2 à 10 atomes de carbone ;
n représente un nombre entier de 1 à 11 ;
x est égal à 0 ou 1 ; et
R représente l'hydrogène ou un groupe alkyle en C₁ à C₁₂ ou un groupe R'-OH dans lequel R' représente un groupe alkyle en C₁ à C₁₂.

14. Procédé suivant la revendication 13, dans lequel n est égal à 1 ou 2, A représente un groupe alkyle à chaîne droite ou ramifiée, en C₃ à C₁₀ perfluoré, R représente l'hydrogène ou un groupe alkyle en C₁ à C₄ et R' représente un groupe alkylène en C₁ à C₄.

15. Procédé suivant la revendication 13 ou 14, dans lequel le polyisocyanate organique avec lequel le composé substantiellement fluoré réactif avec les isocyanates est amené à réagir est le diphénylméthane-diisocyanate sous forme de son isomère 2,4', 2,2' ou 4,4' ou d'un de leurs mélanges ou bien des polyméthylène-polyphénylène-polyisocyanates.

16. Procédé suivant l'une quelconque des revendications 13 à 15, dans lequel le composé substantiellement fluoré réactif avec les isocyanates est utilisé en une quantité comprise dans l'intervalle de 0,02 à 5 % en poids sur la base du poids du polyisocyanate organique.

17. Procédé suivant l'une quelconque des revendications précédentes, qui est mis en oeuvre en présence d'un agent porogène choisi dans le groupe comprenant des hydrocarbures et des hydrofluorocarbones.

18. Procédé suivant l'une quelconque des revendications précédentes, dans lequel la formulation de formation de mousse contient un agent tensio-actif qui n'est pas à base de silicone.

19. Mousse rigide de polyuréthanne ou de polyisocyanurate à modification uréthanne pouvant être obtenue par le procédé répondant à la définition suivant l'une quelconque des revendications précédentes.
